Europäisches Patentamt

European Patent Office

Office européen des brevets

(19)

(11) Numéro de publication: **0 214 090**
**B1**

(12) **FASCICULE DE BREVET EUROPEEN**

(45) Date de publication du fascicule du brevet:
31.01.90

(21) Numéro de dépôt: 86810333.4

(22) Date de dépôt: 24.07.86

(51) Int. Cl.⁴: **B 23 B 29/32,** B 23 B 39/20,
B 23 Q 39/02, B 23 Q 16/10

(54) Dispositif d'entraînement de porte-outils dans une machine d'usinage.

(30) Priorité: 12.08.85 CH 3453/85

(43) Date de publication de la demande:
11.03.87 Bulletin 87/11

(45) Mention de la délivrance du brevet:
31.01.90 Bulletin 90/5

(84) Etats contractants désignés:
AT CH DE FR GB IT LI NL SE

(56) Documents cités:
EP-A- 0 088 131
DE-A- 2 103 741
DE-B- 2 329 671
FR-A- 2 148 994
FR-A- 2 441 452
FR-A- 2 526 343
GB-A- 740 665
GB-A- 2 004 210
GB-A- 2 126 134
US-A- 3 968 415

(73) Titulaire: Schäublin S.A., CH-2735 Bévilard (CH)

(72) Inventeur: Champion, Raymond, Beauregard 20,
CH-2740 Moutier (CH)

(74) Mandataire: Rochat, Daniel Jean et al, Bovard SA
ingénieurs-conseils ACP Optingenstrasse 16,
CH-3000 Bern 25 (CH)

ACTORUM AG

## Description

La commande des machines-outils par des moyens électroniques fonctionnant sur le mode numérique permet de développer des machines-outils multifunctionnelles qui deviennent des centres d'usinage. Ces machines comportent souvent une poupée entraînant en rotation la pièce à usiner et en regarde de cette poupée une tourelle-revolver qui peut être munie d'un assez grand nombre de porte-outils répartis autour de l'axe de la tourelle et recevant soit des porte-outils tournant soit des porte-outils fixes qui sont amenés successivement dans l'emplacement d'usinage où l'outil peut être déplacé de façon à attaquer la pièce à usiner. En général, dans les machines de ce genre, on utilise un moteur électrique pour la commande de l'indexage de la tourelle afin d'amener les porte-outils successivement dans l'emplacement d'usinage et un autre moteur ou une série d'autres moteurs pour l'entraînement des outils tournants.

Toutefois on connaît déjà des dispositifs d'entraînement comprenant une tourelle-révolver capable d'effectuer des déplacements rotatifs d'indexage autour d'un axe, une série de réceptacles de porte-outils amovibles répartis autour du dit axe, des moyens de support et de blocage de la tourelle guidant les dits déplacements et fixant la tourelle par rapport à un socle dans chacune des positions d'indexage, celles-ci étant déterminées de manière à placer les dits porte-outils successivement dans une position de travail, et das moyens d'entraînement comportant un moteur unique, un engrenage associé au moteur et des moyens d'accouplement débrayables montés d'une part sur un arbre d'entraînement d'outils monté sur le socle parallèlement à l'axe de la tourelle, et d'autre part sur le ou les porte-outils tournants. Ainsi, la demande de brevet anglais GB-2 126 134-A notamment décrit un tel dispositif, mais celui-ci représente une construction relativement compliquée et dont la fiabilité n'est pas garantie dans la mesure possible.

Le but de la présente invention est de remédier aux défauts des dispositifs du même genre déjà connus. Dans ce but, le dispositif selon l'invention du genre mentionné au début, est caractérisé en ce que la tourelle comporte une tête de tourelle et un arbre solidaire l'une de l'autre, elle est mobile en rotation et axialement dans un palier entourant l'arbre, les moyens de blocage comportent un ressort de blocage agissant sur l'arbre et lui imposant un déplacement axial, des moyens hydrauliques étant montés de manière à agir à l'encontre du ressort de blocage lors de l'indexage, et les moyens d'entraînement sont en outre agencés de manière qu'un porte-outils tournant monté dans un réceptacle se mette en prise avec l'arbre d'entraînement d'outil, une fois la rotation du porte-outil achevée, lors du dit déplacement axial de blocage.

On va décrire ci-après à titre d'exemple une forme d'exécution de l'objet de l'invention en se référant au dessin annexé, dont:

la fig. 1 est une vue en plan de dessus schématique montrant l'agencement général de la machine-outil, et

la fig. 2 une vue schématique à plus grande échelle partiellement en coupe montrant le dispositif porte-outils et un porte-outils tournant se trouvant dans l'emplacement d'usinage.

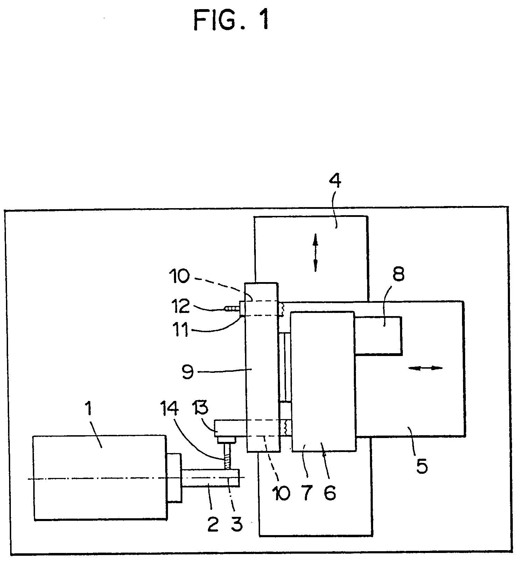

A la fig. 1, une poupée 1 porte et entraîne une pièce à usiner 2 en rotation autour d'un axe d'usinage 3. En regard de la poupée 1 est monté un support constitué de deux coulisses croisées 4 et 5 portant un dispositif d'entraînement 6. La commande des coulisses croisées 4 et 5 n'a pas besoin d'être décrite en détail ici, il s'agit de moyens conventionnels.

Comme on le voit toujours à la fig. 1, le dispositif 6 est un ensemble qui comporte un socle 7 monté sur la coulisse supérieure, un moteur d'entraînement 8 et une tourelle-révolver dont on voit la tête en forme de disque 9. A la périphérie du disque 9 sont ménagés un certain nombre d'alésages 10 normalisés et agencés de façon à pouvoir recevoir soit des porte-outils fixes, soit des porte-outils tournants. Les axes de ces alésages sont parallèles à l'axe du plateau 9 qui est lui-même parallèle à l'axe du moteur 8. A la fig. 1 on a représenté un porte-outil 11 sur lerquel est monté un foret 12 coaxial à l'alésage 10. Dans une position diamétralement opposée on a également représenté un porte-outil 13 qui supporte un foret ou une fraise 14 tournant autour d'une axe qui s'étend radialement par rapport au plateau 9. Toutefois, l'entraînement du porte-outil 13 se fait également à travers l'alésage 10.

Dans la vue schématique de la fig. 1 le porte-outil 13 se trouve dans un emplacement d'usinage, tandis que le porte-outil 11 se trouve dans un emplacement d'attente. Le plateau 9 peut comporter par exemple jusqu'à douze positions de porte-outils réparties autour de son axe, ou même plus.

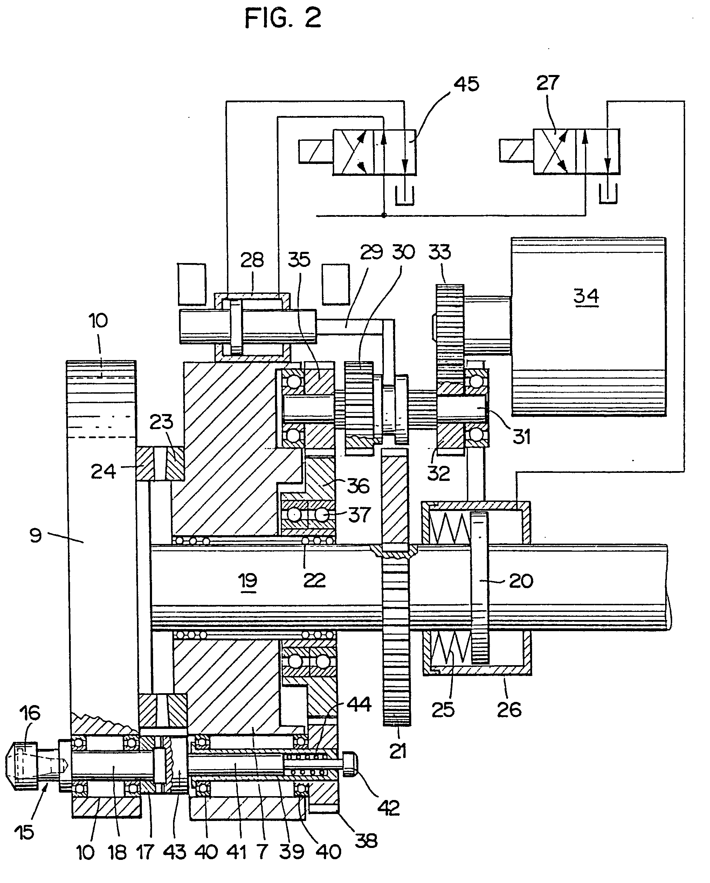

La fig. 2 montre plus en détail l'agencement du dispositif. On voit à nouveau le disque de tourelle 9 avec ses alésages 10. Un porte-outil 15 se trouve dans l'emplacement d'usinage. Il comporte une pince coaxiale à l'alésage 10 permettant d'y assujettir un outil qui n'est pas représenté à la fig. 2, mais qui peut être fixé au moyen d'un écrou 16. Les détails de réalisation du porte-outil ne jouent pas de rôle ici et ne sont représentés que partiellement. On notera cependant qu'à l'extrémité arrière du porte-outil 15 est prévu un élément d'accouplement 17 à griffes axiales solidaires de l'arbre 18 du porte-outil.

Le plateau 9 est solidaire d'un arbre 19 qui porte une collerette 20 et sur lequel est claveté un disque denté 21. Cet arbre 19 est supporté par une coulisse à billes 22 qui lui permet de tourner autour de son axe sur le socle 7 du porte-outil, et de se déplacer axialement par rapport à ce socle entre deux positions axiales dont l'une est une position de blocage et l'autre une position permettant l'indexage de la tourelle. Pour assurer ces positions, on prévoit une couronne à denture axiale 23 qui est solidaire du socle 7 et en regard de cette couronne, une couronne complémentaire 24 qui est solidaire du plateau 9. Ces deux couronnes présentent des dents triangulaires, par exemple orientées dans un sens légèrement conique par rapport à l'axe de l'arbre 19 de sorte que, lorsque la tourelle est déplacée vers la droite à la fig. 2, les dents de la couronne 24 s'engagent dans celles de la couronne 23, ce qui assure le blocage et le positionnement, de même que le centrage du plateau de tourelle. En revanche, si l'arbre 19 est déplacé vers la gauche, les deux couronnes 23 et 24 se dégagent l'une de l'autre et en même temps, comme on le verra plus loin, l'élément d'accouplement 17 du porteoutil 15 se dégage.

Pour assurer les mouvements de la tourelle dans le sens axial, la collerette 20 coopère sur une de ses faces avec un ressort 25 qui peut être constitué par une série d'anneaux plats à profils coniques empilés les uns contre les autres. Les rondelles coniques s'appuyent d'un côté sur une paroi interne d'un boîtier 26, et sur l'autre côté contre la collerette 20. Le boîtier 26 est fixe, et entoure l'arbre 19. Sa partie située à droite à la fig. 2 forme un cylindre qui peut être alimenté en huile sous pression à partir d'un distributeur 27 commandé électriquement en fonction du programme à réaliser. En l'absence de pression d'huile, les ressorts 25 déplacent la tourelle de façon à la maintenir bloquée, alors que, lorsque la pression d'huile s'exerce dans le cylindre 26, on réalise le dégagement de la tourelle, ce qui permet le nombrage. Lors de cette opération, le disque denté 21 se déplace vers la gauche à la fig. 2. En même temps, à partir d'une commande à vérin hydraulique 28 un bras de commande 29 est déplacé, de sorte qu'un pignon-baladeur 30 monté sur un arbre de transmission mixte 31 se déplace vers la droite. L'arbre 31 est cannelé dans sa partie centrale, de sorte que le pignon-baladeur 30 reste accouplé à cet arbre, quelle que soit sa position axiale. Un pignon 32 calé sur une extrémité de l'arbre 31 est un prise avec le pignon-moteur 33 monté sur l'extrémité de l'arbre de sortie d'un moteur électrique 34. Ainsi, le moteur 34 peut effectuer l'indexage de la tourelle. Il faut pour cela que les vérins 28 et 26 soient en action. La distribution de l'huile est commandée par deux organes de commande 27 et 45.

A l'autre extrémité de l'arbre 31 est monté un pignon 35 qui est en prise avec une couronne dentée 36. Celle-ci, comme on le voit à la fig. 2, est montée sur des roulements à billes 37 coaxialement à la coulisse à billes 22. Cette couronne dentée sert à l'entraînement du porte-outil qui se trouve à l'emplacement d'usinage. Elle est en prise avec un pignon 38 qui est calé sur un arbre de transmission d'outil 39. Cet arbre de transmission est un arbre creux. Il est supporté par des roulements à billes 40 sur le socle 7 dans une position coaxiale à celui des alésages 10 qui se trouve dans l'emplacement d'usinage. L'arbre creux 39 est d'autre part cannelé longitudinalement dans sa face interne de façon à être accouplé à un arbre d'entraînement 41 qui traverse toute la longueur de l'arbre 39 et porte à son extrémité arrière un écrou de réglage de butée 42 et à son extrémité avant un élément d'accouplement à griffes 43. Un ressort 44 s'appuie sur un épaulement rentrant de l'arbre 39 et sur une saignée de l'arbre 41 de façon à solliciter ce dernier dans le sens axial, la position de butée étant donnée par l'emplacement de l'écrou 42.

Les moyens décrits permettent un entraînement fiable et précis de la tourelle porte-outil à partir du moteur 34 en fonction d'un programme qui peut être élaboré à volonté selon un très grand nombre de variantes différentes et qui assure la commande automatique des porte-outils en agissant sur la vitesse de rotation du moteur 34 et sur la fonction des distributeurs d'huile 27 et 45. En même temps cet agencement offre un haut degré de sécurité puisque en l'absence d'huile, la tourelle est automatiquement ramenée en position de blocage. Lorsque le moteur 34 doit assurer un mouvement d'indexage de la tourelle, cette dernière doit se trouver en position dégagée axialement et le porte-outil situé en face de l'arbre d'entraînement d'outil 41 est automatiquement découplé, cet arbre étant retenu par l'appui de la butée 42 sur l'extrémité arrière de l'arbre 39. Ainsi, pendant les mouvements d'indexage, aucun outil tournant n'est entraîné en rotation et en position de travail seul l'outil qui se trouve dans l'emplacement d'usinage est entraîné s'il s'agit d'un outil tournant.

Le moteur 34 sera de préférence un moteur à courant continu ou à vitesse variable. Lors du nombrage, le programme peut prévoir que le porte-outil qui doit être amené dans l'emplacement d'usinage peut arriver en place par le chemin le plus court, donc que l'entraînement du moteur se fasse dans un sens ou dans l'autre suivant quelle est la position de départ du porte-outil que l'on désire utiliser. On remarque également qu'avec la disposition décrite le pignon 35 monté sur l'arbre mixte 31 est constamment en prise avec la couronne 36 qui est elle-même constamment en prise avec le pignon 38. Ainsi, la rotation de l'arbre composite 39, 41 d'entraînement d'outil n'est pas interrompue pendant le nombrage. La vitesse de rotation des arbres 39 et 41 peut être adaptée grâce à la commande du moteur 34 à chaque outil tournant qui doit être entraîné. Il est également possible de renverser le sens de rotation de l'outil tournant si par exemple il s'agit d'un taraud où le renversement est nécessaire pour le dégagement de l'outil.

Comme on l'a dit plus haut, le fait d'utiliser le même moteur pour l'indexage de la tourelle et pour l'entraînement du porte-outil tournant qui se trouve en position de travail apporte une simplification constructive importante. Le poids et l'encombrement des moyens d'entraînement sont notablement réduits par rapport à ce qui serait nécessaire dans une construction à plusieurs moteurs. Cependant, il faudra prendre garde qu'à la fin de toute opération d'usinage ayant utilisé un outil tournant le moteur devra être ramené dans une orientation de référence avant que la tourelle soit débloquée et que le pignon 30 soit en prise avec la couronne 20. Cette mesure est naturellement indispensable pour que le programme d'indexage puisse se dérouler correctement et amener l'outil suivant désiré en position de travail. Le programme de commande devra être établi en conséquence et il sera nécessaire de prévoir les détecteurs de position et compteurs de tours nécessaires autour du moteur.

Le dispositif décrit est donc d'une grande souplesse. Comme les coulisses 4 et 5 peuvent aussi être entraînées par des moteurs à commande numérique, tout le programme d'usinage d'une pièce peut être enregistré dans le logiciel de la machine. Les outils montés dans les différentes positions de porte-outil sur le plateau 9 peuvent être utilisés dans n'importe quel ordre, de sorte qu'on peut effectuer des programmes différents, donc usiner successivement plusieurs séries de pièces différentes sans qu'il soit nécessaire de répéter l'ajustage de la machine.

Le dispositif décrit peut être réalisé, par exemple avec un plateau de 330 mm de diamètre portant douze positions de porte-outils, les alésages 10 ayant un diamètre de 45 mm.

## Revendications

1. Dispositif porte-outil dans une machine d'usinage, comprenant une tourelle-révolver (9, 19) capable d'effectuer des déplacements rotatifs d'indexage autour d'un axe, une série de réceptacles (10) de porte-outils (11, 13, 15) amovibles répartis autour du dit axe, des moyens de support (22) et de blocage (23, 24, 25) de la tourelle guidant les dits déplacements et fixant la tourelle par rapport à un socle (7) dans chacune des positions d'indexage, celles-ci étant déterminées de manière à placer les dits porte-outils successivement dans une position de travail, et des moyens d'entraînement comportant un moteur unique (34), un engrenage (33, 30, 21) associé au moteur et des moyens d'accouplement débrayables (17, 43) montés d'une part sur un arbre d'entraînement d'outils (41) monté sur le socle parallèlement à l'axe de la tourelle, et d'autre part sur le ou les porte-outils tournants, caractérisé en ce que la tourelle (9, 19) comporte une tête de tourelle (9) et un arbre (19) solidaires l'une de l'autre, elle est mobile en rotation et axialement dans un palier (22) entourant l'arbre (19), les moyens de blocage comportent un ressort de blocage (25) agissant sur l'arbre (19) et lui imposant un déplacement axial, des moyens hydrauliques (26) étant montés de manière à agir à l'encontre du ressort de blocage lors de l'indexage, et les moyens d'entraînement sont en outre agencés de manière qu'un porte-outils tournant (15) monté dans un réceptable (10) se mette en prise avec l'arbre d'entraînement d'outil (41), une fois la rotation du porte-outil achevée, lors du dit déplacement axial de blocage.

2. Dispositif porte-outils selon la revendication 1, caractérisé par un montage élastique (39, 42, 44) d'au moins une partie de l'arbre d'entraînement d'outil (41), comportant un ressort de maintien (44) assurant l'accouplement du porte-outils tournant (15) se trouvant en position de travail avec l'arbre d'entraînement d'outil (41).

3. Dispositif selon la revendication 1, caractérisé en ce que les moyens hydrauliques de déblocage comportent un cylindre de vérin (26) entourant l'arbre (19) en arrière du palier (22) et une collerette (20) solidaire de l'arbre (19) et jouant le rôle de piston hydraulique à l'intérieur du cylindre (26).

4. Dispositif selon la revendication 3, caractérisé en ce que le ressort de blocage (25) est logé à l'intérieur du cylindre de vérin (26) et agit sur la dite collerette (20).

5. Dispositif selon la revendication 1, caractérisé en ce que les moyens de blocage (23, 24, 25) comportent une première couronne dentée (23) solidaire du socle (7), coaxiale à l'arbre (19) et une seconde couronne dentée (24) solidaire de la tourelle (9, 19) et capable de coopérer avec la couronne (23) solidaire du socle (7) lors du dit déplacement axial.

6. Dispositif selon la revendication 1, caractérisé en ce que les dits moyens d'entraînement comportent un ensemble de transmission (32, 31, 30, 35) qui est constamment en prise avec le moteur (34) et constamment relié au dit arbre d'entraînement d'outil (41).

7. Dispositif selon la revendication 1, caractérisé en ce que l'arbre de tourelle (19) comporte en arrière du palier (22) un disque denté (21) d'entraînement en rotation.

8. Dispositif selon les revendications 6 et 7, caractérisé en ce que l'ensemble de transmission (32, 31, 30, 35) comporte un pignon baladeur (30) mobile sur un arbre cannelé (31) entre une position active et une position inactive, le pignon baladeur (30) étant en prise dans la position active avec le disque denté (21) solidaire de l'arbre (19) de tourelle.

## Patentansprüche

1. Werkzeugträgereinrichtung in einer Werkzeugmaschine, mit einem zum Bewirken von rotatorischen Lageveränderungen der Indexierung um eine Achse herum geeigneten Revolverkopf (9, 19); einer Anzahl von Aufnahmen (10) für Werkzeugträger (11, 12, 15), welche auswechselbar um die besagte Achse herum verteilt sind; mit Lagermitteln (22) und Arretiermitteln (23, 24, 25) für den Revolver zum Führen der besagten Lageveränderungen und zum Fixieren des Revolvers gegenüber einem Sockel (7) in jeder der Indexierungspositionen , welche auf solche Weise festgelegt werden, dass die Werkzeugträger aufeinanderfolgend jeweils in einer Arbeitsposition plaziert werden; und mit Antriebsmitteln, welche einen einzigen Motor (34) beinhalten, wobei der Motor mit einem Räderwerk (33, 30, 21) und mit abschaltbaren Kupplungsmitteln (17, 43) verbunden ist, welche auf der einen Seite auf der Antriebswelle des Werkzeugs (41) montiert sind, welche ihrerseits parallel zur Revolverachse auf dem Sockel montiert ist und andererseits auf dem oder den drehenden Werkzeugträgern montiert ist, dadurch gekennzeichnet, dass der Revolver (9, 19) einen Revolverkopf (9) und eine Welle (19) umfasst, welche beiden Teile ineinander übergehen und in einem die Welle (19) umgebenden Lager (22) axial und rotatorisch beweglich sind; dass eine Verriegelungsfeder (25) beinhaltende und auf die Welle (19) wirkende und dieser eine axiale Verschiebung auferlegende Verriegelungsmittel vorhanden sind; dass hydraulische Mittel (26) vorhanden sind, welche so angebracht sind, dass sie bei der Verriegelung gegen die Verriegelungsfeder wirken und dass ausserdem die Antriebsmittel so beschaffen sind, dass ein drehender Werkzeugträger (15), welcher in einer Aufnahme (10) vorgesehen ist, bei der besagten axialen Verschiebung zur Verriegelung nach Ausführung einer Umdrehung des Werkzeugträgers mit der Antriebswelle des Werkzeuges in Eingriff kommt.

2. Werkzeugträgereinrichtung nach Anspruch 1, gekennzeichnet durch einen elastischen Einbau (39, 42, 44) von wenigstens einem Bereich der Werkzeugantriebswelle (41), wobei eine Haltefeder (44) vorhanden ist, welche sicherstellt, dass sich die Verbindung des drehenden Werkzeugträgers (15) mit der Werkzeugantriebswelle (41) in Arbeitsposition befindet.

3. Einrichtung nach Anspruch 1, dadurch gekennzeichnet, dass die Hydraulikmittel zum Entriegeln einen die Welle (19) hinter dem lager (22) umgebenden Druckzylinder (26), und auf der Welle (19) vorhandenen Absatz (20), welcher die Rolle eines Hydraulikkolbens im Innern des Zylinders (26) spielt, umfassen.

4. Einrichtung nach Anspruch 3, dadurch gekennzeichnet, dass die Verriegelungsfeder (25) innerhalb des Druckzylinders (26) untergebracht ist und auf den besagten Absatz (20) wirkt.

5. Einrichtung nach Anspruch 1, dadurch gekennzeichnet, dass die Verriegelungsmittel (23, 24, 25) einen mit dem Sockel (7) verbundenen und zur Welle (19) koaxialen ersten Zahnkranz (23) und einen mit dem Revolver (9, 19) verbundenen zweiten Zahnkranz (24) umfassen, welcher zweite Zahnkranz (24) geeignet ist, mit dem zum Sockel (7) gehörenden Zahnkranz (23) bei der besagten axialen Verschiebung zusammenzuwirken.

6. Einrichtung nach Anspruch 1, dadurch gekennzeichnet, dass die besagten Antriebsmittel einen Antriebssatz (32, 31, 30, 35) beinhalten, welcher ständig mit dem Motor (34) im Eingriff ist und ständig mit der gesagten Werkzeugantriebswelle (41) verbunden ist.

7. Einrichtung nach Anspruch 1, dadurch gekennzeichnet, dass die Revolverwelle (19) hinter dem Lager (22) ein Zahnrad (21) zum Antrieb der Rotationsbewegung aufweist.

8. Einrichtung nach den Ansprüchen 6 und 7, dadurch gekennzeichnet, dass der Antriebssatz (32, 31, 30, 35) ein auf der mit Rillen versehenen Welle (31) zwischen einer aktiven und einer inaktiven Position bewegbares Schieberad (30) umfasst, wobei das Schieberad (30) in der aktiven Position mit dem Zahnrad (21), welches mit der Revolverwelle verbunden ist, im Eingriff ist.

## Claims

1. Tool holding device in a processing machine, comprising a turret (9, 19), capable of performing rotating movements of indexation around an axis, a series of removable receptacles (10) for tool holders (11, 13, 15) distributed around said axis, supporting (22) and blocking means (23, 24, 25) of the turret guiding said movements and fixing the turret with respect to the socket (7) in each of the indexing positions, these being determined so as to place said tool holders successively in a working position, and driving means comprising a single motor (34), gearing (33, 30, 21) associated with the motor and disengageable coupling means (17, 43) mounted, on the one hand, on a tool drive shaft (41) mounted on the socket parallel to the axis of the turret, and on the other hand on the rotating tool holder(s), characterized in that the turret (9, 19) comprises a turret head (9) and a shaft (19), one integral to the other, it is mobile in rotation and axially in a bearing (22) surrounding the shaft (19), the blocking means comprising a blocking spring (25) acting on the shaft (19) and imposing on it an axial displacement, hydraulic means (26) being placed in a manner to act against the blocking spring at the time of indexation, and the driving means are furthermore arranged in a manner that a revolving tool holder (15) mounted in a receptable (10) engages the tool drive shaft (41), once the revolution of the tool holder is completed at the time of said axial displacement of blockage.

2. Tool holding device according to Claim 1, characterized by a flexible mounting (29, 42, 44) of at least one part of the tool drive shaft (41) comprising a holding spring (44) ensuring coupling of the revolving tool holders (15), situated in working position with the tool drive shaft (41).

3. Device according to Claim 1, characterized in that the hydraulic means of release comprise a jack cylinder (26) surrounding the shaft (19) behind the bearing (22) and a flange (20) integral to the shaft (19) and playing the role of a hydraulic piston in the interior of the cylinder (26).

4. Device according to Claim 3, characterized in that the blocking spring (25) is placed on the inside of the jack cylinder (26) and acts on said flange.

5. Device according to Claim 1, characterized in that the blocking means (23, 24, 25) comprise a first annular gear (23) integral to the socket (7), coaxial to the shaft (19) and a second annular gear (24) integral to the turret (9, 19) and capable of cooperation with the gear (23) integral to the socket (7) at the time of said axial displacement.

6. Device acording to Claim 1, characterized in that said driving means comprise a transmission assembly (32, 31, 30, 35) which is constantly engaged to the motor (34) and is constantly connected to said tool drive shaft (41).

7. Device according to Claim 1, characterized in that the shaft of the turret (19) comprises a toothed rotation-driving disk (21) at the rear of the bearing (22).

8. Device according to Claim 6 and 7, characterized in that the transmission assembly (32, 31, 30, 35) comprises an adjustable sliding gear wheel (30) on a splined shaft (31) between an active and an inactive position, the sliding gear wheel (30) being engaged in the active position with the toothed disk (21) integral to the turret shaft (19).

FIG. 1

# FIG. 2